**Europäisches Patentamt**

**European Patent Office**

**Office européen des brevets**

(19)

(11) Veröffentlichungsnummer: **0 210 472**
**B1**

(12) **EUROPÄISCHE PATENTSCHRIFT**

(45) Veröffentlichungstag der Patentschrift :
07.03.90

(51) Int. Cl.$^5$ : **F 23 D  14/60, F 16 K  11/078,**
**B 01 F  15/04, F 02 M  21/04**

(21) Anmeldenummer : **86109198.1**

(22) Anmeldetag : **05.07.86**

(54) **Vorrichtung zur Regelung der Menge und/oder des Mischungsverhältnisses eines Brenngas-Luft-Gemisches.**

(30) Priorität : **25.07.85 DE 3526608**

(43) Veröffentlichungstag der Anmeldung :
**04.02.87 Patentblatt 87/06**

(45) Bekanntmachung des Hinweises auf die Patenterteilung : **07.03.90 Patentblatt 90/10**

(84) Benannte Vertragsstaaten :
**AT BE CH DE FR GB IT LI LU NL SE**

(56) Entgegenhaltungen :
**DE--A-- 3 120 637**

(73) Patentinhaber : **Ruhrgas Aktiengesellschaft**
**Huttropstrasse 60 Postfach 10 32 52**
**D-4300 Essen 1 (DE)**

(72) Erfinder : **Korsmeier, Wilhelm**
**Spiekeroogstrasse 5**
**D-4350 Recklinghausen (DE)**

(74) Vertreter : **Louis, Walter, Dipl.-Ing. et al**
**Patentanwälte Dipl.-Ing. Walter Louis Dipl.-Ing. Günter Louis Stubertal 3**
**D-4300 Essen 1 (DE)**

**Beschreibung**

Die Erfindung bezieht sich auf eine Vorrichtung zur Regelung der Menge und/oder des Mischungsverhältnisses eines Brenngas-Luft-Gemisches gemäß dem Oberbegriff des Patentanspruchs 1.

Aus der DE-OS 31 20 637 ist eine Vorrichtung der vorgenannten Art bekannt, mit der das Mischungsverhältnis zweier der Vorrichtung zugeführter Medien wie auch die Menge des gebildeten, die Vorrichtung verlassenden Gemisches geregelt werden kann. Diese Vorrichtung ist geschaffen worden, um zwei Medien, die zwei Gas- und/oder Flüssigkeitsströme sein können, regelbar miteinander zu vermischen, die durch Überdruck der Regelvorrichtung zugeführt und als Gemisch an eine Verbrauchs- oder Weiterverarbeitungsanlage weitergefördert werden. Wenn diese bekannte Vorrichtung für die Bildung und Regelung eines Brenngas-Luft-Gemisches z. B. für einen selbstansaugenden Gasmotor angewendet würde, wobei also durch Saugbeaufschlagung des Gemischaustrittes der Vorrichtung Luft und Gas mit Unterdruck durch die Vorrichtung hindurchgesaugt werden, kann sich einstellen, daß an dem zum Gehäuseinnenraum führenden Luftregelquerschnitt zwar im wesentlichen der Unterdruck der Saugbeaufschlagung herrscht, an dem Gasregelquerschnitt hingegen ein ungleicher Unterdruck ansteht, bedingt durch die Ausgestaltung des Gaseintrittsendes des hohlen Regelschiebers und des Gasweges vom Gasregelquerschnitt zum Regelschieberhohlraum, die eine gewisse Drosselung im Gasweg zwischen dem Gasregelquerschnitt und dem Gasauslaß des Regelschieberhohlraumes zum Gehäuseinnenraum hervorruft. Mit einem in der Zuführung von Gas und Luft zur Vorrichtung liegenden Gleichdruckregler bekannter Art wäre eine Beseitigung des Druckunterschiedes möglich, indem der Gleichdruckregler in eine entsprechende, von der neutralen Einstellung abweichende Voreinstellung verstellt wird, was dann allerdings die Folge hat, daß eine Druckänderung in einem der beiden Medien nicht mehr linear für das andere Medium umgesetzt werden kann und hierduch also die Qualität der Regelung beeinträchtigt wird.

Der Erfindung liegt deshalb die Aufgabe zugrunde, eine Vorrichtung der eingangs genannten Art so zu verbessern, daß insbesondere auch bei Saugbeaufschlagung beide Regelquerschnitte für Gas und für Luft immer demselben Druck unterliegen und dadurch eine genaue und auch bei Unterdruckänderungen gleichbleibende Regelung der Gemischbildung ermöglicht wird.

Diese Aufgabe wird gemäß der Erfindung durch die im kennzeichenden Teil des Patentanspruchs 1 enthaltenen Merkmale gelöst. Da einerseits der Regelschieber unmittelbar mit seiner Umfangswandung an der Gehäuseeintrittsöffnung für Gas anliegt und deren Durchlaßquerschnitt verändert und also der Gasregelquerschnitt unmittelbar in den Hohlraum des Regelschiebers einmündet, so daß sich keine Strömungshindernisse mit unerwünschter zusätzlicher Drosselwirkung im Gasweg vom Gasregelquerschnitt durch den Regelschieberhohlraum befinden, und da andererseits der Gasauslaß-Rohrstutzen des Regelschiebers immer in den mit seinem offenen Eintrittsende zum Luftregelquerschnitt gehörenden Mischer eintaucht, wird der bei Saugbeaufschlagung der Vorrichtung am Luftregelquerschnitt herrschende Unterdruck des Mischers auch an den Gasregelquerschnitt angelegt, so daß beide Regelquerschnitte immer dem gleichen Druck unterliegen. Sowohl dazu als auch zu einer im Mischer erfolgenden ausreichenden Verwirbelung beider angesaugten Medien trägt es förderlich bei, daß der rohrförmige Mischer in das Gehäuse hineinragt und dadurch der Gehäuseinnenraum in Gestalt eines Ringkanals das Eintrittsende des Mischers umgibt und der Mischer mit dem Regelschieber einen ringförmig das Mischereintrittsende umgebenden Luftregelquerschnitt bildet. Dadurch ist die dem Gehäuseinnenraum durch die Lufteintrittsöffnung zugeführte Luft bei der Überströmung in den Mischer gleichmäßig über dessen Umfang und zur Vermischung mit dem Gasstrom gleichmäßig über den Querschnitt des ringförmigen Zwischenraumes zwischen Mischer und eintauchendem Rohrstutzen des Regelschiebers verteilt. Insbesondere dann, wenn an die mit besonderem Vorteil für die Saugbeaufschlagung sich eignende Vorrichtung eine Kolbenarbeitsmaschine angeschlossen ist, die zwangsläufig pulsierend arbeitet, wird in dem Mischer eine ausreichende Verwirbelung und Vermischung des aus dem eintauchenden Rohrstutzen des Regelschiebers angesaugten Brenngases und der in gleichmäßiger Verteilung um den Rohrstutzen herum eingesaugten Luft erreicht. Die Gleichheit der an den beiden Regelquerschnitten anstehenden Drücke ermöglicht eine an der Vorrichtung genau und zuverlässig einstellbare Regelung des Mischungsverhältnisses bei jeder an der Vorrichtung eingestellten Menge des Gemisches.

Die erfindungsgemäße Ausbildung der Vorrichtung sowie vorteilhafte weitere Ausgestaltungsmerkmale gemäß den Unteransprüchen werden anhand der in der Zeichnung dargestellten Ausführungsbeispiele beschrieben. In der Zeichnung zeigen

Figur 1 ein Ausführungsbeispiel der erfindungsgemäßen Vorrichtung in einem axialen Längsschnitt,

Figur 2 einen Querschnitt nach der Linie II-II in Figur 1,

Figur 3 ein zweites Ausführungsbeispiel im axialen Längsschnitt,

Figur 4 eine Abwandlung des Ausführungsbeispiels der Figur 3.

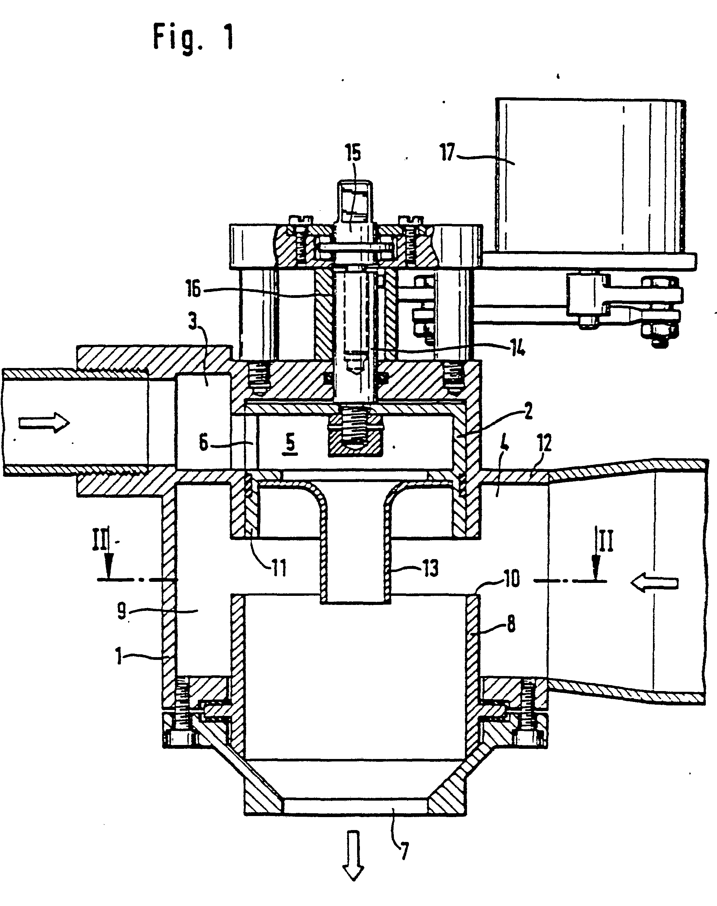

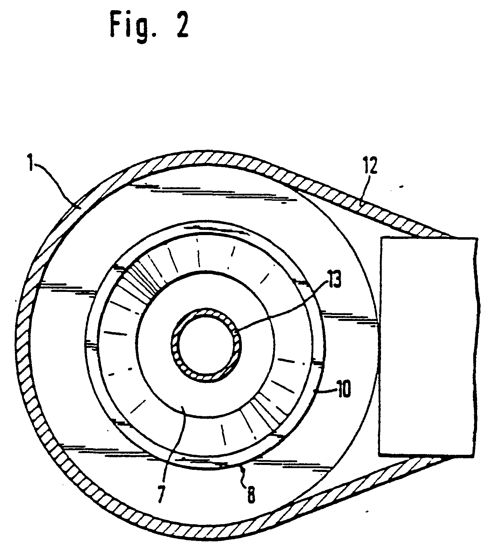

Die in Figur 1 dargestellte Vorrichtung zur Regelung der Menge und/oder des Mischungsverhältnisses eines Brenngas-Luft-Gemisches besteht aus einem etwa rohrartigen Gehäuse 1 und einem in dem Gehäuse längsverschiebbaren und drehbaren Regelschieber 2. Das Gehäuse 1 hat eine seitliche Gaseintrittsöffnung 3 und axial dazu versetzt eine seitliche Lufteintrittsöffnung 4. Der Regelschieber 2 besitzt einen Hohlraum 5 und liegt mit seiner den Hohlraum umgebenden Umfangswandung, die eine fensterartige Öffnung 6 aufweist, direkt an der die Gaseintrittsöffnung 3 enthaltenden Gehäusewandung an, so daß die Umfangswandung des Regelschiebers 2 unmittelbar mit der Gaseintrittsöffnung 3 den direkt in den Hohlraum des Regelschiebers einmündenden Gasregelquerschnitt bildet. Durch Drehen des Regelschiebers im Gehäuse 1 oder durch Verschieben in Gehäuselängsrichtung (in Figur 1 nach unten) ist die Querschnittsüberlappung der Regelschieberöffnung 6 und der Gaseintrittsöffnung 3 des Gehäuses bis zur vollständigen Gasabsperrstellung veränderbar. Dem Regelschieber 2 in dessen Verschieberichtung gegenüberliegend ist am Gemischaustritt 7 des Gehäuses 1 ein rohrförmiger Mischer 8 angeordnet, der mit seinem Eintrittsende in den Gehäuseinnenraum 9 hineinragt, der das Mischereintrittsende ringkanalartig umgibt. Der Umfangsrand 10 des Mischereintrittsendes bildet mit einem dem Umfangsrand zugeordneten Abschnitt 11 des Regelschiebers 2 einen ringförmigen Luftregelquerschnitt, der durch Veränderung des Abstandes zwischen dem Umfangsrand 10 und dem Abschnitt 11 bei Längsverschiebung des Regelschiebers 2 in dem Gehäuse 1 veränderbar ist. Die Anordnung ist so getroffen, daß bei vollständiger Schließung des Gasregelquerschnitts durch Längsverschiebung des Regelschiebers gleichzeitig der Luftregelquerschnitt vollständig geschlossen ist. Um die zugeführte Luft gleichmäßig über den gesamten Umfang des ringkanalartigen Gehäuseinnenraumes 9 und über den gesamten Umfang des ringförmigen Luftregelquerschnitts zu verteilen, ist der die Lufteintrittsöffnung 4 bildende Gehäusestutzen 12 so ausgebildet, daß er sich bei seiner Einmündung in den Gehäuseraum im wesentlichen bis auf den lichten Querschnitt des den Mischer 8 ringkanalartig umgebenden Gehäuseraumes konisch erweitert, wie in Figur 2 gezeigt. Der Gasauslaß des Regelschieberhohlraumes 5 ist von einem Rohrstutzen 13 gebildet, der in allen Verschiebestellungen des Regelschiebers 2 über den ringförmigen Luftregelquerschnitt hinweg bis in den Innenraum des Mischers 8 hineinragt. Dadurch wird, wenn die Vorrichtung mit Saugbeaufschlagung z. B. durch einen Gasmotor betrieben wird, der am Luftregelquerschnitt herrschende Unterdruck des Mischers 8 ungehindert und ungedrosselt auch an den Gasregelquerschnitt angelegt.

Bei dem Ausführungsbeispiel der Figur 1 hat der Regelschieber 2 einen Betätigungsschaft 14, der durch Verdrehen einer in den Schaft 14 axial eingreifenden Stellschraube 15 in dem Gehäuse längsverschiebbar ist. Die Verdrehung der Stellschraube 15, um den Regelschieber 2 in dem Gehäuse 1 zur Mengenregulierung des Gemisches zu verschieben, kann von Hand oder motorisch erfolgen. Der Betätigungsschaft 15 ist von einer Stellhülse 16 umgeben, die in der Vorrichtung drehbar geführt ist und drehfest mit dem Betätigungsschaft 15 gekuppelt ist. Durch Verdrehen der Stellhülse 16 mittels eines an ihr angreifenden Motorantriebes 17 ist der Betätigungsschaft 15 unabhängig von seiner Längsverschiebung in dem Gehäuse verdrehbar, um den Regelschieber 2 in dem Gehäuse zur Regelung des Mischungsverhältnisses zu verdrehen.

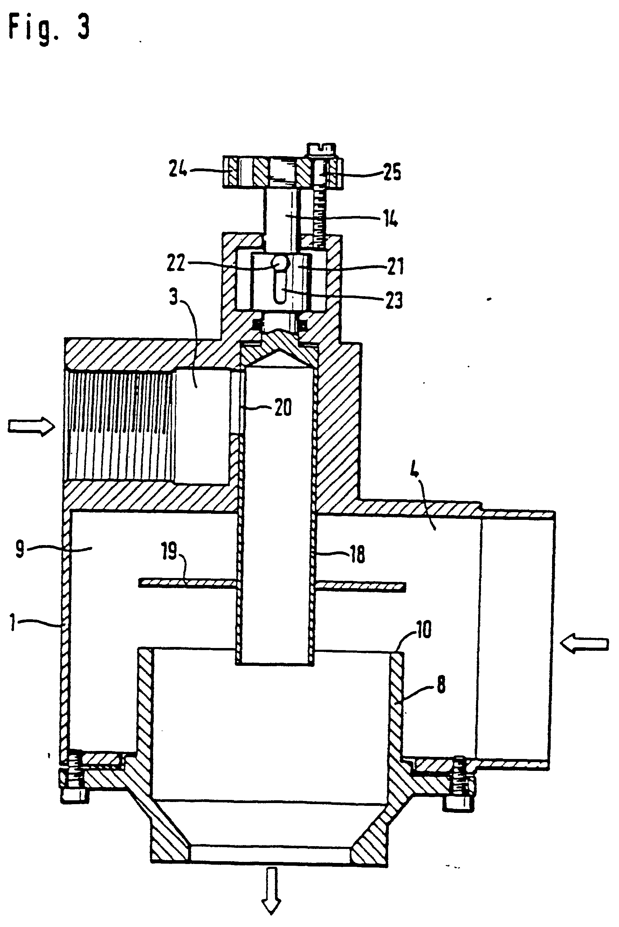

Bei der in Figur 3 dargestellten Vorrichtung besteht der Regelschieber 18 aus einem einfachen Rohr mit einem weit kleineren Durchmesser als der Mischer 8, so daß sich der Regelschieber 18 sogleich nach unten als der in den Mischer 8 hineinragende Rohrstutzen fortsetzt bzw. verlängert. Der Regelschieber 18 besitzt einen nach außen abstehenden Flanschkragen 19, der mit dem Umfangsrand 10 des Mischers 8 den Luftregelquerschnitt bildet und in derjenigen Verschiebestellung des Regelschiebers 18, in der der Regelschieber den Gasregelquerschnitt 20 an der Gaseintrittsöffnung 3 des Gehäuses schließt, auf den Umfangsrand 10 aufsetzbar ist und das Eintrittsende des Mischers 8 gegenüber der Lufteintrittsöffnung 4 des Gehäuses 1 absperrt. Der Gasregelquerschnitt ist selbstverständlich so hoch angeordnet, daß in der den Gasregelquerschnitt und den Luftregelquerschnitt schließenden Stellung des Regelschiebers 18 die fensterartige Gasdurchlaßöffnung in der Umfangswandung des Regelschiebers nicht nach unten in den Gehäuseinnenraum 9 hineinragt, der mit der Luftzuführungsleitung in Verbindung bleibt. Die in Figur 3 dargestellte Vorrichtung dient zur Festeinstellung von Gemischmenge und Mischungsverhältnis, wobei die Motorregelung eines angeschlossenen Gasmotors über eine unterhalb des Mischers 8 sich befindende, nicht näher dargestellte übliche Drosselklappe erfolgen kann. Der in dem Gehäuse der Vorrichtung drehbare und längsverschiebbare Betätigungsschaft 14 des Regelschiebers 18 ist von einer Hülse 21 umgeben, die an dem Gehäuse in Schaftlängsrichtung fixiert ist. Eine in den Betätigungsschaft 14 eingeschraubte Klemmschraube 22 ragt durch einen Längsschlitz 23 der Hülse 21 hindurch, und mittels dieser Klemmschraube 22 ist der Betätigungsschaft 14 und Regelschieber 18 in einer vorbestimmten Verschiebestellung, die die Gemischmenge bestimmt, feststellbar. Am oberen Ende des Betätigungsschaftes 14 ist eine Scheibe 24 mit einem Lochkranz angeordnet, und mittels eines Sperrbolzens 25, der durch ein Loch des Lochkranzes gesteckt ist und in das Gehäuse eingeschraubt ist, ist der Betätigungsschaft 14 und Regelschieber 18 in einer vorbestimmten Drehstellung, die das Mischungsverhältnis bestimmt, feststellbar.

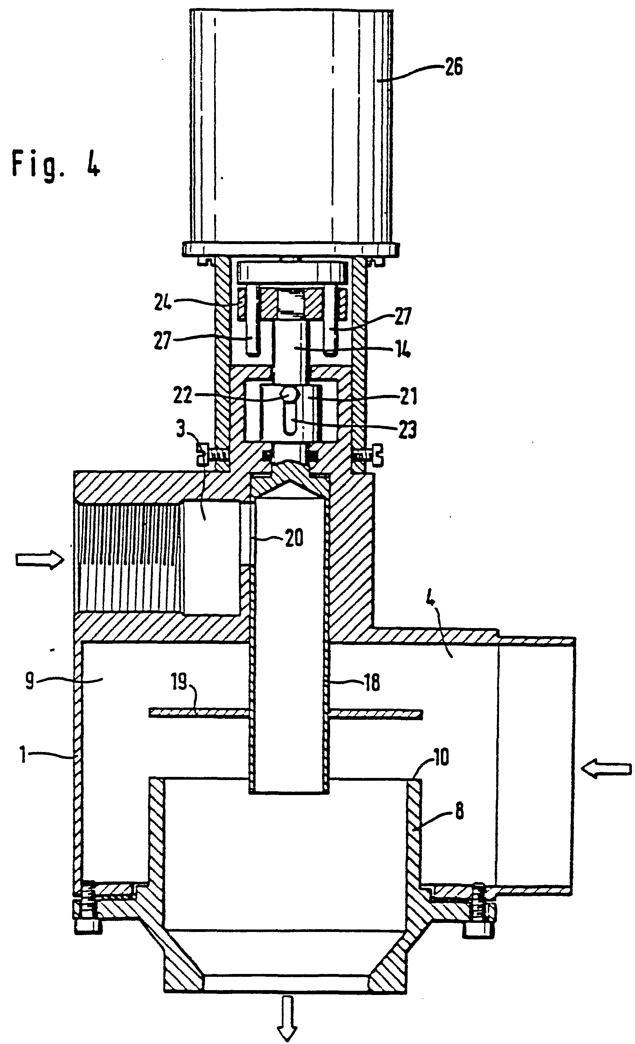

Bei der in Figur 4 dargestellten Abwandlung der Vorrichtung nach Figur 3 ist auf das Gehäuse 1 ein Stellmotor 26 aufgesetzt, der mit Mitnehmern 27 in den Lochkranz der Scheibe 24 eingreift. Bei jeder an der Hülse 21 fest eingestellten Längsverschiebung des Regelschiebers 18 ist der Regelschieber mittels des Stellmotors 26 zur Steuerung des Mischungsverhältnisses verdrehbar. Die in die Scheibe 24 eingreifenden länglichen Mitnehmer 27 erlauben eine Längsverstellung des Betätigungsschaftes 14 in verschiedene Festeinstellungen.

Die Vorrichtung der Figur 3 kann auch an dem Betätigungsschaft 14 ihres Regelschiebers 18 mit zwei Dreh- bzw. Stellantrieben nach Art der Figur 1 ausgebildet sein, wenn eine z. B. motorische Steuerung sowohl des Mischungsverhältnisses als auch der Gemischmenge gewünscht wird, wobei die Steuerung der Gemischmenge eine gesonderte Drosselklappe überflüssig macht und die Steuerung des Mischungsverhältnisses über eine im Abgas angeordnete Lambda-Sonde durchgeführt werden kann.

## Patentansprüche

1. Vorrichtung zur Regelung der Menge und/ oder des Mischungsverhältnisses eines Brenngas-Luft-Gemisches, bestehend aus einem rohrartigen Gehäuse mit zwei seitlichen Eintrittsöffnungen für das Gas und die Luft und aus einem im Gehäuse längsverschiebbaren und drehbaren Regelschieber mit einem zum Gehäuseinnenraum offenen Hohlraum, wobei der Regelschieber durch Verdrehen einen Gasregelquerschnitt im Gasweg zum Regelschieberhohlraum verändert und durch Verschieben gleichzeitig den Gasregelquerschnitt und einen Luftregelquerschnitt im Luftweg durch das Gehäuse verändert, dadurch gekennzeichnet, daß die den Regelschieberhohlraum (5) umgebende Umfangswandung des Regelschiebers (2) eine Öffnung (6) aufweist, die unmittelbar mit der Gaseintrittsöffnung (3) des Gehäuses (1) durch veränderbare Querschnittsüberlappung den direkt in den Hohlraum des Regelschiebers einmündenden Gasregelquerschnitt bildet, daß ein rohrförmiger Mischer (8), der dem Regelschieber (2) in dessen Verschieberichtung gegenüberliegend am Gemischaustritt (7) des Gehäuses angeordnet ist, an seinem in das Gehäuse hineinragenden Eintrittsende von dem an die Lufteintrittsöffnung (4) angeschlossenen Gehäuseinnenraum (9) ringkanalartig umgeben ist und der Umfangsrand (10) des Mischereintrittsendes mit einem zugeordneten Abschnitt (11) des Regelschiebers durch abstandsveränderbares Zusammenwirken den Luftregelquerschnitt bildet, und daß der Regelschieber in allen Verschiebestellungen mit einem den Gasauslaß seines Hohlraumes bildenden Rohrstutzen (13) in den an den ringförmigen Luftregelquerschnitt sich anschließenden Innenraum des Mischers (8) hineinragt.

2. Vorrichtung nach Anspruch 1, dadurch gekennzeichnet, daß die Lufteintrittsöffnung (4) des Gehäuses von einem Lufteintrittsstutzen (12) gebildet ist, der sich vor seiner Einmündung in den den Mischer (8) ringkanalartig umgebenden Gehäuseinnenraum (9) im wesentlichen bis auf den lichten Durchmesser des Gehäuseinnenraumes konisch verbreitert.

3. Vorrichtung nach Anspruch 1 oder 2, dadurch gekennzeichnet, daß der rohrförmige Regelschieber (18) einen nach außen abstehenden, auf den Umfangsrand (10) des Mischereintrittsendes aufsetzbaren Flanschkragen (19) aufweist, der in der Verschiebestellung des Regelschiebers, in der der Regelschieber den Gasregelquerschnitt schließt, das Eintrittsende des Mischers (8) gegen Lufteintritt absperrt.

4. Vorrichtung nach Anspruch 1 bis 3, dadurch gekennzeichnet, daß der Regelschieber (2) einen Betätigungsschaft (14) aufweist, der mittels einer in den Schaft axial eingreifenden Stellschraube (15) in dem Gehäuse (1) längsverschiebbar ist und mittels einer den Schaft umgebenden, drehfest mit dem Schaft gekuppelten Stellhülse (16) in dem Gehäuse verdrehbar ist.

5. Vorrichtung nach Anspruch 1 bis 3, dadurch gekennzeichnet, daß der Regelschieber (18) einen im Gehäuse drehbaren und längsverschiebbaren Betätigungsschaft (14) aufweist, der in einer am Gehäuse in Schaftlängsrichtung fixierten Hülse (21) mittels einer am Schaft und an der Hülse angreifenden Klemmschraube (22) in vorbestimmten Verschiebestellungen feststellbar ist und mittels eines am Schaft und am Gehäuse angreifenden Sperrbolzens (25) in vorbestimmten Drehstellungen feststellbar ist.

## Claims

1. A device for controlling the flow rate and/or the mixing ratio of a combustible gas-air mixture comprising a tubular body with two lateral inlet orifices for gas and for air and a control slide which is longitudinally movable in said body and rotatable and has an inside cavity opening to a space inside said body, said slide, when being rotated, modifying a cross-sectional area in a gasway to said space and thereby controlling gas flow and said slide, when being moved longitudinally, modifying simultaneously said cross-sectional area in said gasway and a cross-sectional area in an airway through said body characterized in that the wall surrounding said cavity (5) inside said control slide (2) is provided with an opening (6) of a given cross-sectional area which directly interacts with the cross-sectional area of said inlet orifice for gas (3) in said body (1) to vary the inlet gasway cross-sectional area for controlling gas flow into said cavity inside said control slide and in that a tubular mixer (8) arranged in the area of the mixture outlet (7) of said body opposite said control slide (2), viewed in the direction of longitudinal control slide travel, is, at its inlet end protruding into said body surrounded in an annular duct fashion, by said space (9) inside said body being in communication with said inlet orifice for air (4) and an edge (10) of said mixer inlet end interacts with a corresponding part (11) of said control slide through varying the distance between said edge and said part to vary the cross-sectional area of the airway to control air flow, and in that a tubular stub (13) of said control slide being the gas outlet from the cavity therein, in any of the travel positions of said control slide, protrudes into a space inside said mixer downstream from and in communication with said variable annular airway.

2. A device according to claim 1 characterized in that said air inlet orifice (4) in said body is an air inlet stub (12) which widens conically substantially to the inside diameter of said space (9) inside said body upstream from the inlet of said annular space (9) around said mixer (8).

3. A device according to claim 1 or 2 characterized in that said tubular control slide (18) is provided with a flange-type collar (19) protruding from said slide and placeable on said edge (10) of said mixer inlet end, said collar isolating said inlet end of said mixer (8) from the airway when said slide has travelled into a position in which the gasway is closed.

4. A device according to any one of claims 1 through 3 characterized in that said control slide (2) is provided with an actuating spindle (14) movable in the longitudinal direction inside said body (1) by means of a setting screw (15) engaging axially with said spindle and rotatable inside said body by means of a setting sleeve (16) surrounding said spindle and non-rotatably coupled thereto.

5. A device according to any one of claims 1 through 3 characterized in that said control slide (18) is provided with an actuating spindle (14) rotatable and movable in the longitudinal direction inside said body, said spindle being lockable in certain positions of longitudinal travel in a sleeve (21) fixed to the body and arranged in the direction of the spindle axis by means of a locking screw (22) engaging with the spindle and the sleeve and lockable in certain positions of rotation by means of locking bolt (25) engaging with the shaft and the body.

**Revendications**

1. Dispositif pour la régulation du débit et/ou des proportions d'un mélange gaz combustible-air, composé d'un carter tubulaire avec deux ouvertures d'entrée latérales pour l'amenée du gaz et de l'air et d'un dispositif régulateur pouvant être déplacé dans le sens longitudinal du carter et tourné, ledit dispositif régulateur entourant une partie creuse débouchant sur l'intérieur du carter et qui lorsqu'il est tourné, modifie la section de régulation du passage du gaz vers la partie creuse et lorsqu'il est déplacé dans le sens longitudinal du carter, modifie simultanément la section de régulation du débit de gaz et celle du passage de l'air, caractérisé par le fait que la paroi cylindrique entourant la partie creuse (5) du dispositif régulateur (2) présente une ouverture (6) qui avec l'ouverture d'entrée du gaz (3) pratiquée dans le carter (1) forme par des recouvrements variables des deux sections, la section de régulation du débit de gaz débouchant directement sur la partie creuse du régulateur, que le pourtour de l'extrémité d'entrée d'un mélangeur tubulaire (8) placé à la sortie d'évacuation du mélange (7) du carter, face au dispositif régulateur (2) dans le sens longitudinal de ce dernier, est entouré de manière annulaire par la partie intérieure du carter (9) qui lui-même est raccordé à l'ouverture d'entrée de l'air (4) et que le bord circonférentiel (10) de l'extrémité d'entrée du mélangeur forme avec une partie correspondante (11) du dispositif régulateur en interaction modifiant la distance entre ledit bord et ladite partie, la section de régulation du débit d'air et que le dispositif régulateur, quelle que soit sa position de réglage pénètre avec une extrémité tubulaire (13), constituant la sortie de gaz de sa partie creuse, à l'intérieur du mélangeur (8), situé en aval de la section annulaire de régulation du débit d'air.

2. Dispositif selon la revendication 1 caractérisé par le fait que l'ouverture d'entrée de l'air (4) pratiquée dans le carter est constituée par une tubulure (12) qui avant de déboucher sur l'intérieur du corps (9) entourant de manière annulaire le pourtour du mélangeur, s'élargit de manière conique jusqu'à ce qu'elle atteigne pratiquement le diamètre intérieur de la partie intérieur du corps.

3. Dispositif selon l'une quelconque des revendications 1 ou 2, caractérisé par le fait que le dispositif régulateur cylindrique (18) est muni d'une collerette (19) à rebord en saillie pouvant être posée sur le bord circonférentiel (10) de l'extrémité d'entrée du mélangeur en fermant cette extrémité contre toute pénétration d'air lorsque le dispositif régulateur ferme la section de régulation du débit du gaz.

4. Dispositif selon l'une quelconque des revendications 1 à 3, caractérisé par le fait que le dispositif régulateur (2) est muni d'une tige d'actionnement (14) qui moyennant une vis de réglage (15) agissant axialement sur cette tige peut être déplacée à l'intérieur du carter (1) dans le sens longitudinal de celui-ci et moyennant une douille de réglage (16) entourant la tige et raccordée à cette dernière de façon à éviter une rotation différentielle, peut être tournée à l'intérieur du carter.

5. Dispositif selon l'une quelconque des revendications 1 à 3, caractérisé par le fait que le dispositif régulateur est muni d'une tige d'actionnement (14) pouvant être tournée et déplacée à l'intérieur du carter dans le sens longitudinal de celui-ci et arrêtée dans différentes positions pré-réglées de son déplacement longitudinal dans une douille (21) fixée sur le carter en direction axiale de la tige à l'aide d'une vis de blocquage (22) agissant sur la douille et la tige et qui peut être arrêtée dans différentes positions rotatives préréglées à l'aide d'un verrou (25) agissant sur la tige et le carter.

# Fig. 1

# Fig. 2

# Fig. 3

Fig. 4